# EUROPEAN PATENT SPECIFICATION

(11) **EP 3 162 440 B1**
(45) Date of publication and mention of the grant of the patent: **30.06.2021**
(21) Application number: 16001962.6
(22) Date of filing: 08.09.2016
(51) Int. Cl.: B01L 3/00, B01F 11/00, B01F 15/00

(54) **REACTION CASSETTE AND ASSAY DEVICE**
REAKTIONSKASSETTE UND ASSAY-VORRICHTUNG
CASSETTE DE RÉACTION ET DISPOSITIF DE DOSAGE

(30) Priority: 27.10.2015 US 201562246847 P
(43) Date of publication of application: 03.05.2017
(73) Proprietor: Apex Biotechnology Corporation, Hsinchu City 300 (TW)
(72) Inventor: Chen, Sz Hau, 300 Hsinchu City (TW); Hsu, Ming Chang, 300 Hsinchu City (TW); Wu, Ya Chun, 300 Hsinchu City (TW); Lin, Tin En, 300 Hsinchu City (TW)
(74) Representative: Flaccus, Rolf-Dieter

(56) References cited:
- FR-A1- 2 918 900
- US-A- 5 162 237
- US-A- 5 518 311
- US-A1- 2009 263 282
- US-A1- 2013 121 898
- US-A1- 2014 127 828
- US-A1- 2015 031 071
- US-B2- 7 641 871
- YU-CHENG LIN ET AL: "Mixing enhancement of the passive microfluidic mixer with J-shaped baffles in the tee channel", BIOMEDICAL MICRODEVICES, vol. 9, no. 2, 2 April 2007 (2007-04-02), pages 215-221, XP55000005, ISSN: 1387-2176, DOI: 10.1007/s10544-006-9023-5
- ALI ASGAR S BHAGAT ET AL: "A passive planar micromixer with obstructions for mixing at low Reynolds numbers", JOURNAL OF MICROMECHANICS & MICROENGINEERING, INSTITUTE OF PHYSICS PUBLISHING, BRISTOL, GB, vol. 17, no. 5, 17 April 2007 (2007-04-17) , pages 1017-1024, XP020120099, ISSN: 0960-1317, DOI: 10.1088/0960-1317/17/5/023
- LEI WANG ET AL: "Mixing enhancement of a passive microfluidic mixer containing triangle baffles", ASIA-PACIFIC JOURNAL OF CHEMICAL ENGINEERING JANUARY/FEBRUARY 2007 JOHN WILEY AND SONS LTD; THE ATRIUM GB, vol. 9, no. 6, 25 July 2014 (2014-07-25), pages 877-885, XP55349334, US ISSN: 1932-2135, DOI: 10.1002/apj.1837
- None

## Description

### Cross Reference to Related Applications

### Field of Invention

The present invention generally relates to reaction cassettes and assay devices, and more particularly, to reaction cassettes for biochemical assay with blending structures in mixing zones. The reaction cassettes are configured to receive a sampling part for storing a sample along with a liquid reagent, the sampling part being configured to be inserted to the reaction cassette from above. The present invention further relates to assay devices using the reaction cassette.

### Background of the Invention

In vitro diagnostic (IVD) assay has been widely utilized in the qualitative and quantitative assessment of body fluid for providing information regarding diagnosis and therapy. For this reason, in vitro medical measurement plays a very important role and has become an increasingly important means in modem day's healthcare industry. Healthcare professionals observe changes of important physiological signals or detection indices in patients by qualitatively and quantitatively measuring changes in the body fluids, thereby rapidly diagnosing disease and providing treatment in accordance with the index information.

The abovementioned detection technologies require in conjunction with a variety of testing equipment and measuring instruments and various configurations of test solution. Generally, the detection device can be a micro channel biochemical test strip. The sample (e.g., blood) drags by capillary action into a reaction zone and reacts with a reagent thereof. This micro channel biochemical test strip, however, is a one-way system in the process of leading the sample into the reaction zone. As a result, the sample first into reaction zone will release most of the reagents, while that later into the reaction zone has insufficient mixable reagent.

On the other hand, some corporates in the industry take advantage of a reaction cassette as detection devices. The reagents are placed in the reaction cartridge. By controlling specific rotation angles of the reaction cassette and reaction time, the desired effect of detection can be achieved. However, most of the commercially available reaction cassettes adopt flow channels with flatted or curved of structure in order to allow smooth flow of the sample. The flow channels with flatted or curved of structure prone to causing problems of uneven mixing the sample with a reagent or incomplete dissolved solution.

Among the relevant background art, US 2013/0121898 A1 discloses a reaction cassette for biochemical assays, a biochemical assay device including a first space configured to accommodate a liquid, having a first opening and rounded edges, a direction of the first opening being directed upward. A second space includes a second opening, a direction of the second opening being perpendicular to the direction of the first opening, wherein the first space and the second space are disposed such that when the reaction cassette is rotated, the liquid is allowed to drain into the second space. A third space is located below the first space and has a third opening, a direction of the third opening being upward such that when the reaction cassette is reversibly rotated, the liquid is allowed to drain into the third space, wherein an array of bumps is disposed in the third space to create turbulence of the liquid. An inner partition wall, connected with the second opening and the third opening, acts as a liquid flow channel between the second space and the third space.

### Summary of the Invention

According to an aspect of the present invention, as defined in claim 1, a reaction cassette for biochemical assay comprises a housing with structural walls defining a liquid mixing space for accommodating a first mixing zone, a second mixing zone, a third mixing zone, an optical detection zone, and an absorption zone, wherein at least one mixing zone comprises at least one blending structure for generating a vortex phenomenon in liquid, thereby improving the degree of mixture of a liquid sample and a dried reagent. The reaction cassette is configured to receive a sampling part for storing a sample along with a liquid reagent, the sampling part being configured to be inserted to the reaction cassette from above.

The liquid mixing space comprises said first mixing zone which is configured to accommodate a mixture of a liquid and a reagent. The first mixing zone has rounding edges and corners, leading the liquid mixture to the optical detection zone. The first mixing zone includes a first opening which faces upward such that the sample along with the liquid reagent can flow from the sampling part into the first mixing zone upon inserting the sampling part into the reaction cassette when the reaction cassette is in an upright position.

The optical detection zone has the capability of receiving a mixture of liquid and reagent, the optical detection zone being disposed such that the liquid mixture flows from the first mixing zone into the optical detection zone when the reaction cassette is rotated clockwise by 90° from its upright position.

The second mixing zone has the capability of receiving a mixture of liquid and reagent, and it is disposed below the first mixing zone such that the liquid mixture flows from the optical detection zone into the second mixing zone via the first inclined plane when the reaction cassette is rotated counterclockwise by 90° back to its upright position, and such that the liquid mixture is caused to flow back into the optical detection zone when the reaction cassette is rotated clockwise by 90° from its upright position.

The third mixing zone has the capability of receiving a mixture of liquid and reagent, the third mixing zone being disposed such that that the liquid mixture flows from the optical detection zone into the third mixing zone via a second inclined plane disposed between the second and the third mixing zones when the reaction cassette is rotated counterclockwise equal to 175° from its previous position.

The absorption zone has the capability of receiving a mixture of liquid and reagent, the absorption zone being disposed above the third mixing zone and having a spill-proof wall disposed between the third mixing zone and the absorption zone to prevent the liquid mixture in the third mixing zone from overflowing into the absorption zone by accident. The absorption zone is disposed such that when the reaction cassette is rotated counterclockwise by 90° from its upright position, the liquid mixture is caused to flow to the absorption zone to be absorbed by absorbent material included in the absorption zone. A housing defining a space for accommodating the first mixing zone, the second mixing zone, the third mixing zone, the optical detection zone and the absorption zone.

In some embodiments, the second and the third mixing zones comprise said blending structures for accommodating dried reagents and improving the degree of mixture of the liquid sample and the dried reagents.

In some embodiments, the blending structure comprises a first barrier wall, a second barrier wall, a structural wall and a spill-proof wall. The first and second barrier walls comprise a beveled outer wall, an inner wall, and a wall peak platform.

In some embodiments, the blending structures comprise at least one arcuate blade, generating an arcuate flow of the liquid in accordance with its structure so that part of the liquid creates a vortex phenomenon in the center of the arcuate blade. In another embodiment, the blending structures comprise at least one rhombic blade, generating an inclined flow of the liquid in accordance with its structure so that part of the liquid creates a vortex phenomenon due to a flow rate difference between a turn-back liquid and other liquid. In still another embodiment, the blending structures comprise at least one trapezoidal blade, generating an inclined flow of the liquid in accordance with its structure so that part of the liquid creates a vortex phenomenon due to a flow rate difference between a turn-back liquid and other liquid.

According to another aspect of the present invention, as defined in claim 10, a biochemical assay device comprises a reaction cassette for biochemical assay as defined in claim 1 and as described above. The biochemical assay device further comprises a sampling part that is configured to be inserted to the reaction cassette. The sampling part comprises a sampling tube, which is configured to draw a liquid sample, and a reservoir configured to store a liquid reagent.

The other aspects of the present invention, part of them will be described in the following description, part of them will be apparent from description, or can be known from the execution of the present invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### Brief Description of the Pictures

The foregoing aspects and many of the attendant advantages of this invention will become more readily appreciated as the same becomes better understood by reference to the following detailed description, when taken in conjunction with the accompanying pictures, wherein:
FIG. 1 is a schematic plan view of a reaction cassette according to an embodiment of the present invention;
FIG. 2 is a schematic view illustrating respective steps for detecting the liquid sample performed by a detecting apparatus in accordance with the present invention;
FIG. 3 is a schematic view of the liquid flow field while shaking the mixing zones;
FIG. 4 is a plan view schematically illustrating a blending area of the blending structure in accordance with another embodiment of the present invention;
FIG. 5 is a plan view schematically illustrating a blending area of the blending structure in accordance with another embodiment of the present invention;
FIG. 6 is a plan view schematically illustrating a blending area of the blending structure in accordance with another embodiment of the present invention; and
FIGs 7A and 7B are statistic chart illustrating measuring signals by the reaction cassette.

### Detailed Description of the Invention

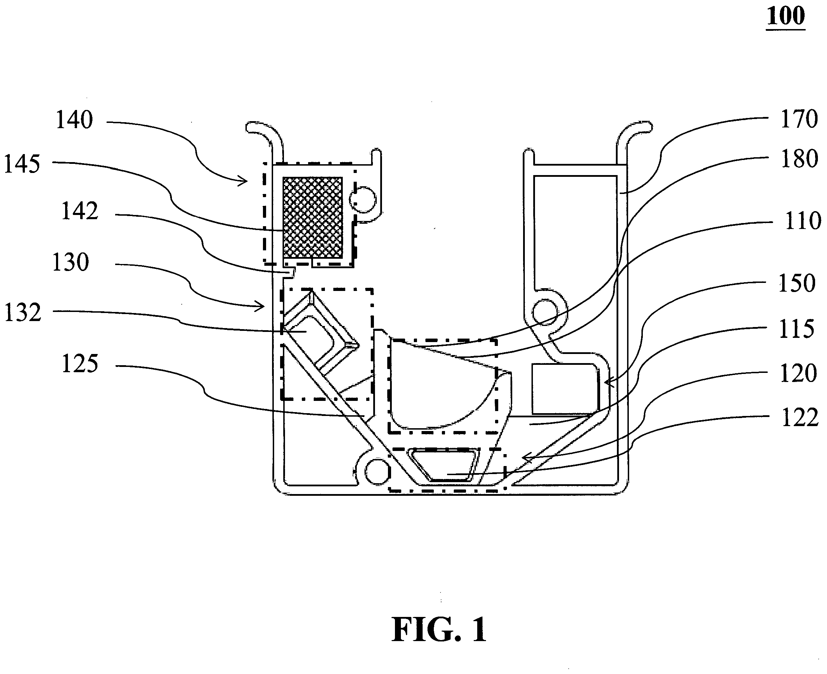

The present invention discloses an assay device and an assay method using the same for carrying out the process of analyzing constituents of a liquid sample in a more convenient and safer manner. The present invention will be described more fully hereinafter with reference to the FIG. 1 to FIG. 7B. However, it should be noted that the features illustrated in the drawings are not necessarily drawn to scale, and like reference numerals represent the same or similar elements. The devices, elements, and methods in the following description are configured to illustrate the present invention, and should not be construed in a limiting sense.

FIG. 1 is a schematic plan view of a reaction cassette according to an embodiment of the present invention. As shown in FIG. 1, a reaction cassette 100 comprises a housing with structural walls 170 defining a liquid mixing space for accommodating at least one mixing zone. The liquid mixing space includes a first mixing zone 110, a second mixing zone 120, a third mixing zone 130, an optical detection zone 150 and an absorption zone 140. A housing defining a space for accommodating the first mixing zone, the second mixing zone, the third mixing zone, the optical detection zone and the absorption zone which have capability of receiving mixture of liquid and reagent respectively. Particularly, a first inclined plane 115 is disposed between the optical detection zone 150 and the first mixing zone 110 so that the liquid can smoothly flow through. A second inclined plane 125 is disposed between the second mixing zone 120 and third mixing zone 130 so that the liquid can smoothly flow through. A spill-proof wall 142 is disposed between the third mixing zone 130 and the absorption zone 140, preventing the mixed liquid in the third mixing zone 130 from overflowing into the absorption zone 140 accidentally. Furthermore, the first mixing zone 110 includes a first opening 180 and an arcuate corner structure configured to provide a liquid reagent completely smoothly flowing from the first reaction zone to the optical detection zone 150, thereby increasing the smoothness of the liquid flow. The second mixing zone 120 and the third mixing zone 130 comprise blending structures 122 capable of accommodating dried reagents and improving the degree of mixture of the liquid sample and the dried reagents. The reaction cassette 100 is preferably made of optical transparent material formed by injection molding. In order to reduce interference by the side light, surfaces of the reaction cassettes is performed mist finishing.

The absorption zone 140 includes a hollowed, non-densified structure with openings, in which the openings, for example, can be located below the absorption zone, facilitating absorption of the sample and reagents by an absorbent material 145. The absorbent material 145 may comprise a variety of materials having a high absorbency, such as cotton, sponges, diatomite, filter paper, etc.

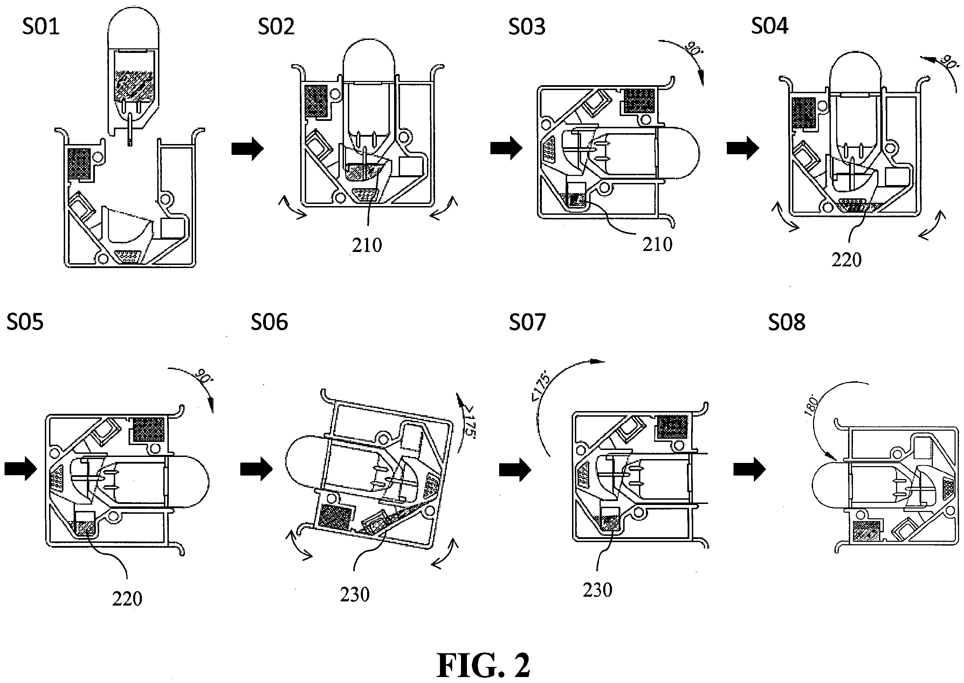

FIG. 2 is a schematic view illustrating respective steps for detecting the liquid sample performed by a detecting apparatus in accordance with the present invention. First, with reference to step S01 the sample along with a liquid reagent stored in a sampling part is placed into a reaction cassette. After the sample and the liquid reagent flow into a first mixing zone of the reaction cassette, shake the reaction cassette as indicated in the step S02 so that a first mixture 210 is generated from uniformly mixing and reaction of the liquid reagent and the sample. Further referring to step S03, the reaction cassette is rotated clockwise about 90° so that the first mixture 210 flows from the first mixing zone into the optical detection zone of the reaction cassette, thereby acquiring a first concentration by using optical measurement.

Next, referring to step S04, the reaction cassette is rotated counterclockwise 90° so that the first mixture flows into the second mixing zone via the first inclined plane. After the reaction cassette is shaken, the first mixture 210 and the dried reagent in the second mixing zone are thoroughly mixed and reacted, thereby generation a second mixture 220. Further as shown in step S05, the reaction cassettes is rotated 90° clockwise so that the second mixture 220 flows into the optical detection zone again, thereby acquiring a second concentration by optical measurement.

Next, referring to step S06, the reaction cassette is rotated counterclockwise less than or equal to 175° so that the second mixture flows into the third mixing zone via the second inclined plane. After the reaction cassette is shaken, the second mixture and the dried reagent in the third mixing zone are thoroughly mixed and reacted, thereby generation a third mixture 230. In order to prevent the second mixture 220 or the third mixture 230 from overflowing to a recycling zone due to over-shaking, in one embodiment, a spill-proof wall is provided in the third mixing zone near the recycling zone. Further as shown in step S07, the reaction cassettes is rotated less than or equal to 175° clockwise so that the third mixture flows into the optical detection zone again, thereby acquiring a third concentration by optical measurement.

Finally as shown in step S08, the reaction cassette is rotated counterclockwise over 180° so that the third mixture flows into and is recycled by the absorbent material in the absorption zone of the reaction cassette. A concentration with medical significance can be calculated by using the first concentration, the second concentration and the third concentration. Note that in the aforementioned steps, the measured optical signals can be converted to electrical signals. Subsequent analysis and comparison process can thus be performed in order to calculate the ratio or concentration of a specific component in a liquid sample. Embodiments of the present invention do not intend to limit various angles of rotation and shack of the reaction cassette during the measurement process, only if the liquid sample and reagents can be smoothly mixed incorporated with the location of each mixing zones. Related mixing and measuring methods can refer to US Pat. No. 8,617,490, titled "Reaction cassette, assay device, and assay method" and U.S. Pat. No. 8,802,036, titled "Reaction cassette and assay device".

As shown in FIG. 2, as the liquid enters in the mixing zone, the reflecting cassette is shaken to facilitate mixing the dried agent with the liquid mixture. The liquid mixture fills part of the blending structure such that the blending structure of the present invention is presented as a vertical relationship with respect to the liquid surface while mixing. When shaking the reaction cassette from side-to-side, an obtained force in the liquid impacts the dried agent within the blending structure so that the dried agent is dissolved in the liquid and flows out the blending structure. In one embodiment, a first mixture is created based on mixing liquid samples with liquid medicament. A second mixture is created based on mixing the first mixture with the dried agent in the second mixing zone. A third mixture is created based on mixing the second mixture with the dried agent in the third mixing zone. The second mixture is more thickened compared with the first mixture such that the thick level of liquid will affect the capability to dissolve the dried agent. In order to improve the capability for the first and second mixtures dissolving and uniformly mixing the dried agent, a blending structure is particularly provided in the second and third mixing zone respectively with the dried agent contained therein. In order to simplify the description, the liquid samples, the first mixture, the second mixture and the third mixture are collectively referred to as the liquid mixtures in the following description. The second and third mixing zones are collectively referred to as the mixing zones.

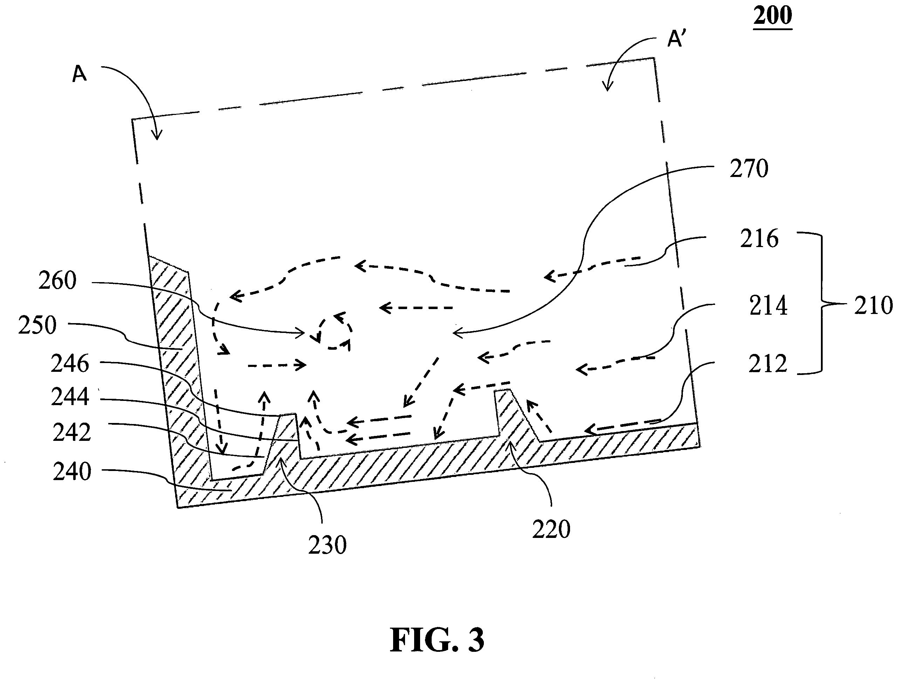

FIG. 3 is a schematic view of the liquid flow field while shaking the mixing zones. Liquid 210 can be divided into a viscous layer 212, a transition layer 214 and turbulent layer 216 according to its shear stress effect on the structural wall 240. The viscous layer 212 is very thin, about 1% of the diameter of the liquid 210, wherein the intra-layered velocity distribution is approximately linear. The fluctuation of the turbulence would be disappeared because of confinement of the structural wall 240, so here is substantially a laminar flow. The flow rate of the viscous layer 212 is slow and steady compared to the transition layer 214 and the turbulent layer 216. The turbulent layer 216 is located at top of all liquid layers, wherein the shear stress exerted by the structural wall 240 is relatively small. However, the gravity suffered from shaking is relatively larger than those of fluids at the viscous layer 212 and transition layer 214 such that the flow rate of the turbulent layer 216 is more rapid and completely turbulent compared to liquid at other layers. The transition layer 214 is located between the viscous layer 212 and the turbulent layer 216, wherein its flow rate is ranged between those of the viscous layer 212 and the turbulent layer 216 and will be affected by both gravity and shear stress with the structural wall 240.

As shown FIG. 3, the blending structure 200 of some embodiments of the present invention comprises a first barrier wall 220, a second barrier wall 230, a structural wall 240 and a spill-proof wall 250. The first and second barrier walls 220, 230 comprise a beveled outer wall 242, an inner wall 244, and a wall peak platform 246. When the reaction cassette swings toward the right side and is presented as A' relatively higher than A, the liquid flows toward A due to gravity. As the liquid flows through the first barrier wall 220 of the blending structure 200, the originally smooth flow in the transition layer 214 is obstructed due to beveled outer wall 242, producing energy loss of the fluid and deriving pressure-drop. In the meantime, a spoiler is generated in the transition layer 214, part of the viscous layer 212 and the turbulent layer 216. However, the overall orientation of the liquid flow does not change until the liquid expands and crosses the beveled outer wall 242 reaching the wall peak platform 246. A height difference exists between the wall peak platform 246 and the structure wall 240 such that the liquid located at the wall peak platform 246 is subjected greater shear stress that at the structural wall 240, stabilizing liquid pressure at the transition layer 214. When the liquid expands over the wall peak platform 246, a height difference generates shear stress and gravity mutations causing overall force at the transition layer 214 generates being destructed and generating a separation phenomenon 270. Part of the transition layer 214 adjusting to the turbulent layer 216 is brought into the turbulent layer 216 accelerating toward point A. After the flow impacts the spill-proof wall 250, the spill-proof wall 250 generates an anti-gravity force forcing the flow orientation of the turbulent layer toward point A'. The turbulent layer 216 flows back to point A' causing confliction of the flow rate and flow orientation generating a vortex phenomenon 260 which is created in the vicinity of the second barrier wall 230.

Another part of the transition layer 214 adjacent to the viscous layer 212 accelerates and impacts the reagent (not shown) within the blending structure 200 and flows toward the second barrier wall 230. As the liquid in the transition layer 214 meets the obstruction of the inner wall 244 of the second barrier wall 230, the liquid flow of the transition layer 214 is forced bringing the reagent out of the blending structure 200 due to change of potential and increasing swirl energy of the vortex phenomenon 260. In the meantime, the reagent is brought from the liquid with high content to liquid with low content to proceed with mixed diffusion through the vortex phenomenon 260, thereby making the reagent uniformly distributed. If the reaction cassette begins swinging toward the left side, the potential of the liquid will change such that the flow direction of the liquid is opposites to the direction of vortex. Note that the width of the wall peak platform 246 of the present invention would not be intended to be limited. It would only require that the wall peak platform 246 can stabilize pressure of the transition layer and provide the transition layer 214 with a separation phenomenon 270. Preferably, the width of the wall peak platform 246 is about 0.25~6 mm. More preferably, the width of the wall peak platform 246 is about 0.1~3 mm. Moreover, the slope of the beveled outer wall 242 of the present invention would not be intended to be limited. It would only require that the liquid can expand and across. Preferably, the beveled outer wall 242 and the structural wall 240 include 5 to 80 degrees. More preferably, the beveled outer wall 242 and the structural wall 240 include 20 to 70 degrees. Even more preferably, the beveled outer wall 242 and the structural wall 240 include 30 to 50 degrees.

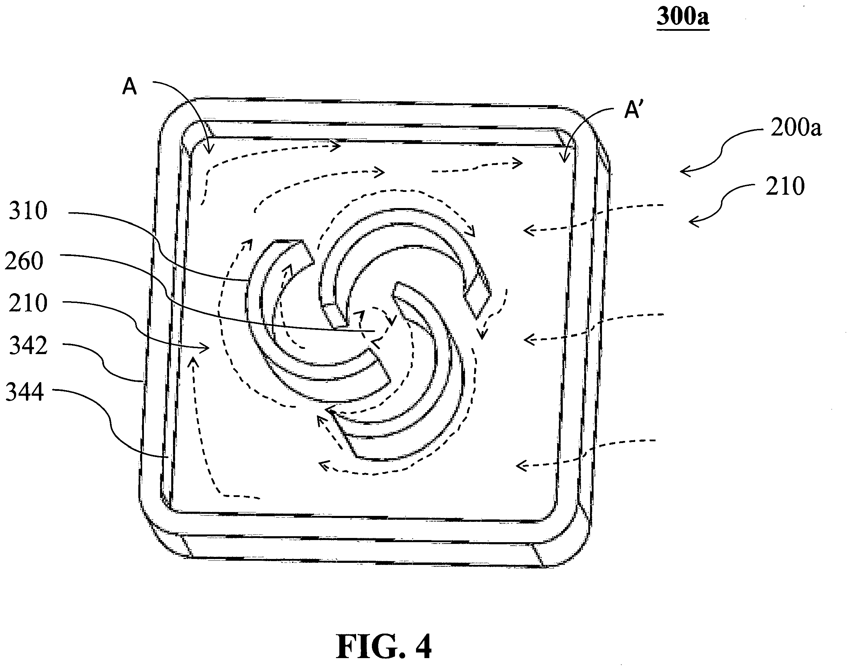

FIG. 4 is a plan view schematically illustrating a blending area 300a of the blending structure 200a in accordance with another embodiment of the present invention. When the reaction cassette swings toward the right side and is presented as A' relatively higher than A, the liquid of the turbulent layer and part of transition layer flows toward A due to gravity. As the liquid 210 impacts the spill-proof wall, the spill-proof wall generates an anti-gravity force forcing flow orientation of the turbulent layer toward point A'. The turbulent layer flows back to point A' causing confliction of the flow rate and flow orientation generating a vortex phenomenon 260 which is created in the vicinity of the second barrier wall. Other liquids of part of the transition layer and the viscous layer accelerate and impact the reagent (not shown) within the blending structure and flow toward the inner wall 344 adjacent to the point A. The blending structure 200a of some embodiments of the present invention comprises at least one arcuate blade 310. In addition to flowing toward the inner wall 344 adjacent to the point A, the liquid 210 will flow in arcuate along arcuate blade 310 due to shear stress and cohesion force affecting the liquid. Therefore, not only will part of the liquid generate the vortex phenomenon 260 in the vicinity of the outer wall 342 of the blending structure 200a, but it will also generate the vortex phenomenon 260 in the center of the arcuate blade structure 310. When the reaction cassette reverses and is presented as A' relatively lower than A, the direction of liquid flow is opposite to the direction of the vortex 260.

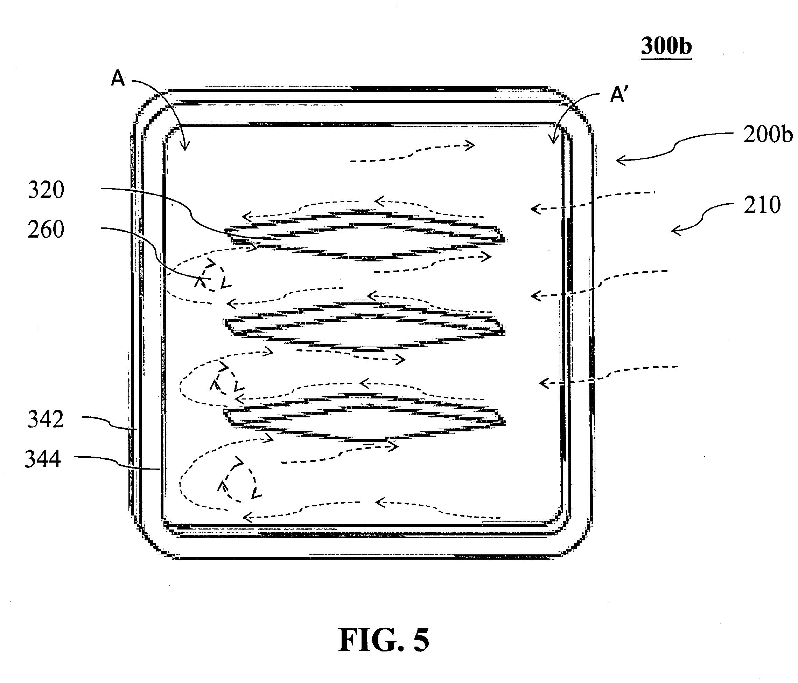

FIG. 5 is a plan view schematically illustrating a blending area 300b of the blending structure 200b in accordance with another embodiment of the present invention. When the reaction cassette swings toward the right side and is presented as A' relatively higher than A, the liquid 210 of the turbulent layer and part of transition layer flows toward A due to gravity. As the liquid 210 impacts the spill-proof wall, the spill-proof wall generates an anti-gravity force forcing flow orientation of the turbulent layer toward point A'. The turbulent layer flows then back to point A' causing confliction of the flow rate and flow orientation generating a vortex phenomenon 260 which is created in the vicinity of the second barrier wall. Other liquid of part of the transition layer and the viscous layer accelerate and impact the reagent (not shown) within the blending structure 200b and flow toward the inner wall 344 adjacent to the point A. The blending structure 200b of some embodiments of the present invention comprises at least one diamond-shaped blade 320. The diamond-shaped blade 320 guides flow of the liquid 210 in tilt, presenting non-horizontal linear flow in the transition layer. After impinging the inner wall 344, the liquid of the transition layer turn back toward point A. The turn-back liquid and other liquid have differences in flow rate and flow orientation due to an active force generated from striking the inner wall 344. Therefore, not only will part of the liquid generate the vortex phenomenon 260 in the vicinity of the outer wall 342 of the blending structure 200b, but it will also generate the vortex phenomenon 260 in the rear end of the diamond-shaped blade 320. Moreover, the diamond-shaped blade 320 of some embodiments of the present invention can make liquid of the transition layer flowing from A' to A with an oblique angle, thereby increasing differences in flow rate and flow orientation and enhancing energy of the vortex phenomenon 260. When the reaction cassette reverses and is presented as A' relatively lower than A, the direction of liquid flow is opposite to the direction of the vortex.

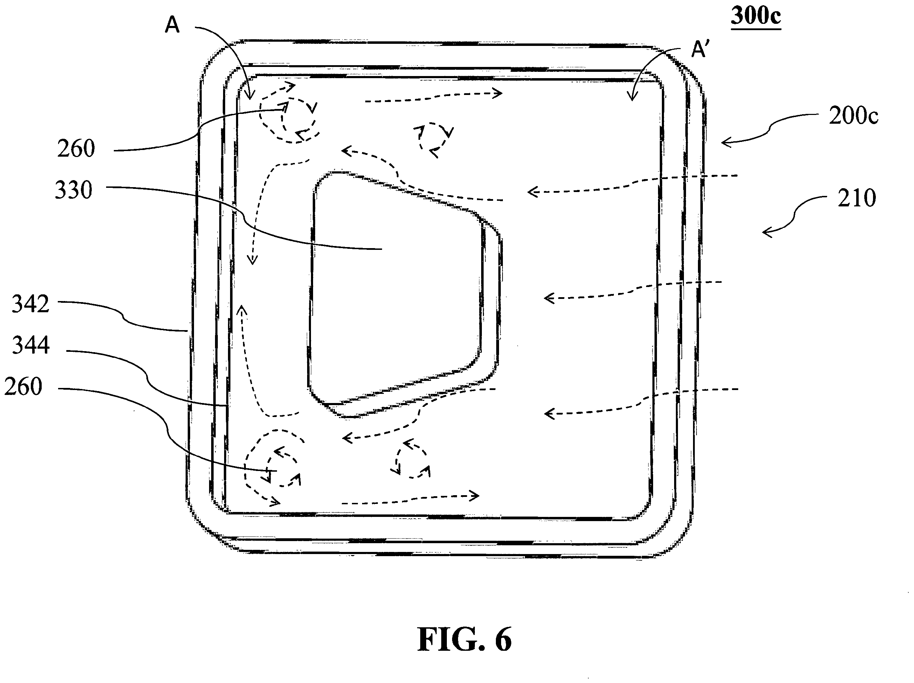

FIG. 6 is a plan view schematically illustrating a blending area 300c of the blending structure 200c in accordance with another embodiment of the present invention. When the reaction cassette swings toward the right side and is presented as A' relatively higher than A, the liquid 210 of the turbulent layer and part of transition layer flows toward A due to gravity. As the liquid 210 impacts the spill-proof wall, the spill-proof wall generates an anti-gravity force forcing flow orientation of the turbulent layer toward point A'. The turbulent layer flows back to point A' causing confliction of the flow rate and flow orientation generating a vortex phenomenon 260 which is created in the vicinity of the second barrier wall. Other liquid of part of the transition layer and the viscous layer accelerates and impacts the reagent (not shown) within the blending structure 200c and flows toward the inner wall 344 adjacent to the point A. The blending structure 200c of some embodiments of the present invention comprises at least one trapezoidal blade 330. The trapezoidal blade 330 guides flow of the liquid 210 in gradient alone its structure. Therefore, the transition layer and the viscous layer present non-horizontal linear flow. After impinging the inner wall, the liquid of the transition layer and the viscous layer turn back toward point A'. The turn-back liquid and other liquids create a difference in flow rate due to an active force generated from striking the inner wall 344, therefore generating the vortex phenomenon 260. In addition, the turn-back flow of the transition layer and the viscous layer moves toward point A' alone the inner wall 344, thereby generating vortex phenomenon 260 at both sides of the trapezoidal blade 330. When the reaction cassette reverses and is presented as A' relatively lower than A, the direction of liquid flow is opposite to the direction of the vortex.

Note that the shape of the blending structure of the present invention do not be intended to be limited, as it can be a square shape in FIGs. 3 to 6. The blending structure can also be geometrically adjusted according to component layout of the reaction cassette and requirements for measurement. The shape of outer wall of the blending structure can be, but not limited to: circular, elliptical, fan-shaped, arcuate, triangular, trapezoidal, oblong, rhombus, rectangle, harrier-shaped, polygonal and the likes.

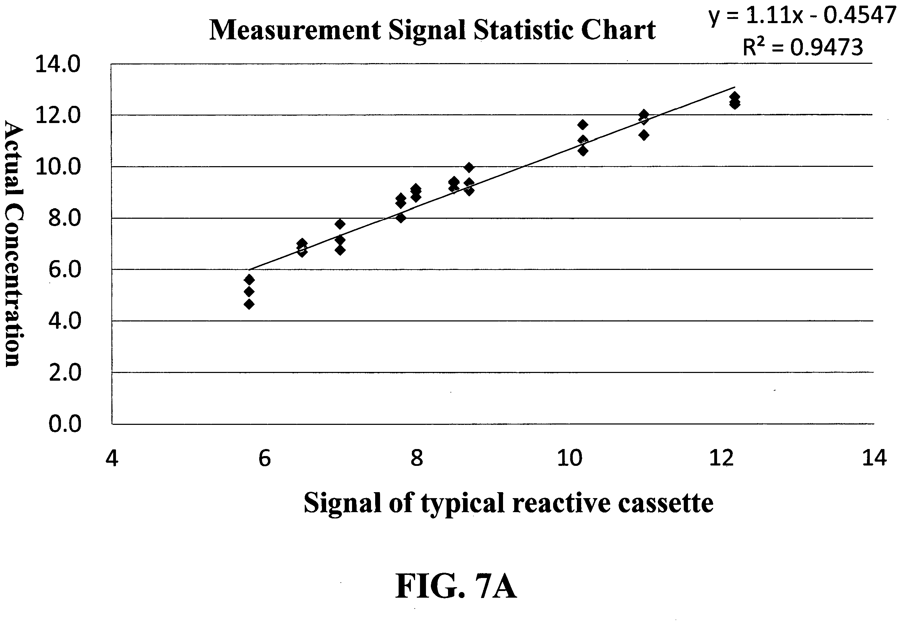

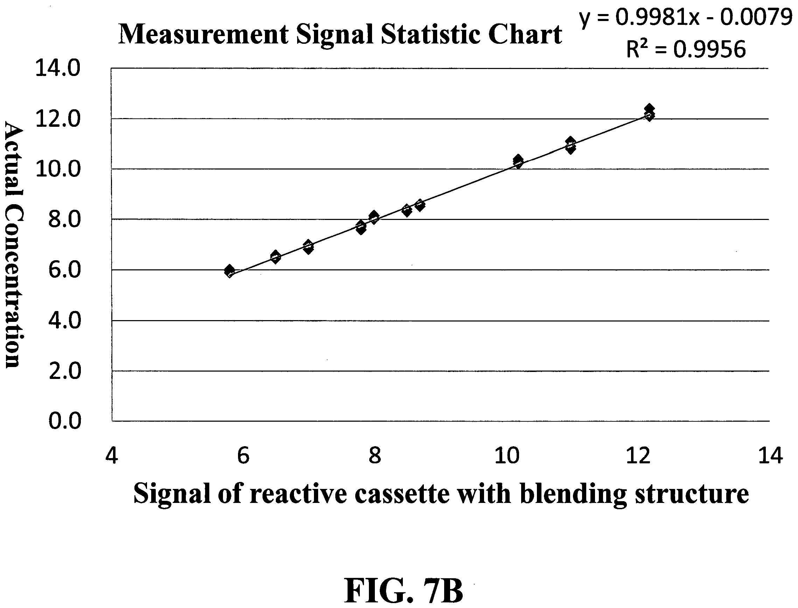

FIGs. 7A and 7B are statistic chart illustrating measuring signals by the reaction cassette. The inventors use the reaction cassettes without and with blending structures of the present invention performing some statistic concentration measurements respectively. As shown in FIG. 7A, the reaction cassette without the blending structure results in a large amount of measuring errors, while the R² value using the reaction cassette with the blending structures of the present invention is 0.995 as indicated in FIG. 7B. Since the vortex phenomenon presented the liquid is created by the blending structure in accordance with embodiments of the present invention and the vortex phenomenon can easily make the sample uniformly mixed with the reagent, a high-precision measurement structure can thus be obtained.

## Claims

1. A reaction cassette (100) for biochemical assay, the reaction cassette being configured to receive a sampling part for storing a sample along with a liquid reagent, the sampling part being configured to be inserted to the reaction cassette from above,
wherein the reaction cassette comprises a housing with structural walls (170) defining a liquid mixing space for accommodating a first mixing zone (110), a second mixing zone (120), and a third mixing zone (130), an optical detection zone (150), and an absorption zone (140), and wherein the liquid mixing space comprises:
the first mixing zone (110) configured to accommodate a liquid, having rounded edges and corners, and including a first opening (180) which faces upward such that the sample along with the liquid reagent can flow from the sampling part into the first mixing zone (110) upon inserting the sampling part into the reaction cassette when the reaction cassette is in an upright position;
the optical detection zone (150) having the capability of receiving a mixture of liquid and reagent, the optical detection zone being disposed such that the liquid mixture (210) flows from the first mixing zone into the optical detection zone when the reaction cassette (100) is rotated clockwise by 90° from its upright position;
the second mixing zone (120) having the capability of receiving a mixture of liquid and reagent, the second mixing zone being disposed below the first mixing zone (110) such that the liquid mixture (210) flows from the optical detection zone (150) into the second mixing zone via the first inclined plane (115) when the reaction cassette is rotated counterclockwise by 90° back to its upright position, and such that the liquid mixture (220) is caused to flow back into the optical detection zone (150) when the reaction cassette is rotated clockwise by 90° from its upright position;
the third mixing zone (130) having the capability of receiving a mixture of liquid and reagent, the third mixing zone being disposed (120) such that that the liquid mixture (220) flows from the optical detection zone (150) into the third mixing zone (130) via a second inclined plane (125) disposed between the second and the third mixing zones when the reaction cassette is rotated counterclockwise equal to 175° from its previous position;
the absorption zone (140) having the capability of receiving a mixture of liquid and reagent, the absorption zone being disposed above the third mixing zone (130) and having a spill-proof wall (142) disposed between the third mixing zone and the absorption zone to prevent the liquid mixture in the third mixing zone from overflowing into the absorption zone by accident, and the absorption zone (140) being disposed such that when the reaction cassette is rotated counterclockwise by 90° from its upright position, the liquid mixture (230) is caused to flow to the absorption zone (140) to be absorbed by absorbent material (145) included in the absorption zone;
and wherein at least one of the first mixing zone (110), the second mixing zone (120), and the third mixing zone (130) comprises at least one blending structure (200) for generating a vortex phenomenon in liquid, thereby improving the degree of mixture of a liquid sample and a dried reagent.

2. The reaction cassette according to claim 1, wherein the second and the third mixing zones (120, 130) comprise said blending structures (200) which are capable of accommodating dried reagents and improving the degree of mixture of the liquid sample and the dried reagents.

3. The reaction cassette according to claim 1, wherein the reaction cassette is made of materials with optical grade transparency.

4. The reaction cassette according to claim 1, wherein the absorption zone (140) includes a hollowed, non-densified structure with openings, wherein the openings are located below the absorption zone, thereby facilitating absorption of the sample and reagents by an absorbent material (145).

5. The reaction cassette according to claim 4, wherein the absorbent material (145) comprises materials having high absorbency, comprising cotton, sponges, diatomite, and filter paper.

6. The reaction cassette according to claim 1, wherein the blending structure (200) comprises at least one arcuate blade (310), generating an arcuate flow of the liquid in accordance with its structure so that part of the liquid creates the vortex phenomenon in the center of the arcuate blade.

7. The reaction cassette according to claim 1, wherein the blending structure (200) comprises at least one diamond-shaped blade (320), generating an inclined flow of the liquid in accordance with its structure so that part of the liquid creates the vortex phenomenon due to a flow rate difference between a turn-back liquid and other liquid.

8. The reaction cassette according to claim 1, wherein the blending structure (200) comprises at least one trapezoidal blade (330), generating an inclined flow of the liquid in accordance with its structure so that part of the liquid creates a vortex phenomenon due to a flow rate difference between a turn-back liquid and other liquid.

9. The reaction cassette according to claim 1, wherein an outer wall (342) of the blending structure (200) has a shape selected from circular, elliptical, fan-shaped, arcuate, triangular, trapezoidal, oblong, rhombus, rectangle, barrier-shaped, and polygonal.

10. A biochemical assay device, comprising:
a reaction cassette (100) for biochemical assay as claimed in claim 1;
a sampling part configured to be coupled to the reaction cassette, comprising:
a sampling tube configured to draw a liquid sample; and
a reservoir configured to store a liquid reagent.

## Patentansprüche

1. Reaktionskassette (100) für einen biochemischen Assay, wobei die Reaktionskassette so konfiguriert ist, dass sie einen Probenahmeteil zur Aufbewahrung einer Probe zusammen mit einem flüssigen Reagenz aufnehmen kann, wobei der Probenahmeteil so konfiguriert ist, dass er von oben in die Reaktionskassette eingesetzt werden kann,
wobei die Reaktionskassette ein Gehäuse mit Strukturwänden (170) aufweist, die einen Flüssigkeitsmischraum zur Aufnahme einer ersten Mischzone (110), einer zweiten Mischzone (120) und einer dritten Mischzone (130), einer optischen Nachweiszone (150) und einer Absorptionszone (140) definieren, und wobei der Flüssigkeitsmischraum umfasst:
die für die Aufnahme einer Flüssigkeit konfigurierte erste Mischzone (110), die abgerundete Kanten und Ecken aufweist und eine erste Öffnung (180) enthält, welche nach oben gerichtet ist, so dass die Probe, beim Einsetzen des Probenahmeteils in die Reaktionskassette, zusammen mit dem flüssigen Reagenz aus dem Probenahmeteil in die erste Mischzone (110) fließen kann, wenn sich die Reaktionskassette in einer aufrechten Position befindet,
die optische Nachweiszone (150), die ein Gemisch aus Flüssigkeit und Reagenz aufnehmen kann, wobei die optische Nachweiszone so angeordnet ist, dass das Flüssigkeitsgemisch (210) von der ersten Mischzone in die optische Nachweiszone fließt, wenn die Reaktionskassette (100) aus ihrer aufrechten Position um 90° im Uhrzeigersinn gedreht wird,
die zweite Mischzone (120), die ein Gemisch aus Flüssigkeit und Reagenz aufnehmen kann, wobei die zweite Mischzone unterhalb der ersten Mischzone (110) angeordnet ist, so dass das flüssige Gemisch (210) von der optischen Nachweiszone (150) über die erste schiefe Ebene (115) in die zweite Mischzone fließt, wenn die Reaktionskassette um 90° gegen den Uhrzeigersinn, zurück in ihre aufrechte Position, gedreht wird, und so dass das flüssige Gemisch (220) veranlasst wird, in die optische Nachweiszone (150) zurückzufließen, wenn die Reaktionskassette aus ihrer aufrechten Position um 90° im Uhrzeigersinn gedreht wird,
die dritte Mischzone (130), die ein Gemisch aus Flüssigkeit und Reagenz aufnehmen kann, wobei die dritte Mischzone so angeordnet ist (120), dass das Flüssigkeitsgemisch (220) von der optischen Nachweiszone (150) über eine zweite schiefe Ebene (125), die zwischen der zweiten und der dritten Mischzone angeordnet ist, in die dritte Mischzone (130) fließt, wenn die Reaktionskassette aus ihrer vorherigen Position um 175° gegen den Uhrzeigersinn gedreht wird,
die Absorptionszone (140), die ein Gemisch aus Flüssigkeit und Reagenz aufnehmen kann, wobei die Absorptionszone oberhalb der dritten Mischzone (130) angeordnet ist und eine überlaufsichere Wand (142) aufweist, die zwischen der dritten Mischzone und der Absorptionszone angeordnet ist, um zu verhindern, dass das Flüssigkeitsgemisch in der dritten Mischzone versehentlich in die Absorptionszone überläuft, und wobei die Absorptionszone (140) so angeordnet ist, dass wenn die Reaktionskassette aus ihrer aufrechten Position um 90° gegen den Uhrzeigersinn gedreht wird, das Flüssigkeitsgemisch (230) veranlasst wird, zu der Absorptionszone (140) zu fließen, so dass es von dem in der Absorptionszone enthaltenen absorbierenden Material (145) absorbiert wird,
und wobei mindestens eine von erster Mischzone (110), zweiter Mischzone (120) und dritter Mischzone (130) mindestens eine Mischstruktur (200) zur Erzeugung eines Wirbelphänomens in der Flüssigkeit aufweist, wodurch der Grad der Vermischung einer flüssigen Probe und eines getrockneten Reagenzes verbessert wird.

2. Reaktionskassette nach Anspruch 1, wobei die zweite und die dritte Mischzone (120, 130) die Mischstrukturen (200) aufweisen, welche in der Lage sind, getrocknete Reagenzien aufzunehmen und den Grad der Vermischung der flüssigen Probe und der getrockneten Reagenzien zu verbessern.

3. Die Reaktionskassette nach Anspruch 1, wobei die Reaktionskassette aus Materialien mit optischer Transparenz hergestellt ist.

4. Reaktionskassette nach Anspruch 1, wobei die Absorptionszone (140) eine hohle, nicht verdichtete Struktur mit Öffnungen aufweist, wobei die Öffnungen unterhalb der Absorptionszone angeordnet sind, wodurch die Absorption der Probe und der Reagenzien durch ein absorbierendes Material (145) erleichtert wird.

5. Reaktionskassette nach Anspruch 4, wobei das absorbierende Material (145) Materialien mit hoher Absorptionsfähigkeit, umfassend Baumwolle, Schwämme, Kieselgur und Filterpapier, umfasst.

6. Reaktionskassette nach Anspruch 1, wobei die Mischstruktur (200) mindestens eine bogenförmige Schikane (310) aufweist, die entsprechend ihrer Struktur eine bogenförmige Strömung der Flüssigkeit erzeugt, so dass ein Teil der Flüssigkeit das Wirbelphänomen in der Mitte der bogenförmigen Schikane erzeugt.

7. Reaktionskassette nach Anspruch 1, wobei die Mischstruktur (200) mindestens eine rautenförmige Schikane (320) aufweist, die entsprechend ihrer Struktur eine geneigte Strömung der Flüssigkeit erzeugt, so dass ein Teil der Flüssigkeit, aufgrund einer Strömungsgeschwindigkeitsdifferenz zwischen einer Rücklaufflüssigkeit und einer anderen Flüssigkeit, das Wirbelphänomen erzeugt.

8. Reaktionskassette nach Anspruch 1, wobei die Mischstruktur (200) mindestens eine trapezförmige Schikane (330) aufweist, die entsprechend ihrer Struktur eine geneigte Strömung der Flüssigkeit erzeugt, so dass ein Teil der Flüssigkeit, aufgrund einer Strömungsgeschwindigkeitsdifferenz zwischen einer Rücklaufflüssigkeit und einer anderen Flüssigkeit, das Wirbelphänomen erzeugt.

9. Reaktionskassette nach Anspruch 1, wobei eine Außenwand (342) der Mischstruktur (200) eine Form aufweist, die aus kreisförmig, elliptisch, fächerförmig, bogenförmig, dreieckig, trapezförmig, länglich, rautenförmig, rechteckig, barriereförmig und polygonal ausgewählt ist.

10. Vorrichtung für einen biochemischen Assay, umfassend:
eine Reaktionskassette (100) für einen biochemischen Assay nach Anspruch 1;
einen Probenahmeteil, der so konfiguriert ist, dass er mit der Reaktionskassette gekoppelt werden kann, umfassend:
ein Probenahmeröhrchen, das zum Ziehen einer Probe ausgelegt ist, und
ein Reservoir, welches so konfiguriert ist, dass es ein flüssiges Reagenz speichern kann.

## Revendications

1. Cassette de réaction (100) pour dosage biochimique, la cassette de réaction étant configurée pour recevoir une partie d'échantillonnage pour stocker un échantillon avec un réactif liquide, la partie d'échantillonnage étant configurée pour être insérée dans la cassette de réaction par le haut, la cassette de réaction comprenant un logement avec des parois structurales (170) définissant un espace de mélange de liquide pour accueillir une première zone de mélange (110), une deuxième zone de mélange (120), et une troisième zone de mélange (130), une zone de détection optique (150), et une zone d'absorption (140), et
l'espace de mélange de liquide comprenant :
la première zone de mélange (110) configurée pour accueillir un liquide, ayant des bords et coins arrondis, et incluant une première ouverture (180) qui est tournée vers le haut de telle sorte que l'échantillon avec le réactif liquide puisse s'écouler depuis la partie d'échantillonnage jusque dans la première zone de mélange (110) lors de l'insertion de la partie d'échantillonnage dans la cassette de réaction lorsque la cassette de réaction est dans une position verticale ;
la zone de détection optique (150) ayant la capacité de recevoir un mélange de liquide et de réactif, la zone de détection optique étant disposée de telle sorte que le mélange de liquide (210) s'écoule depuis la zone de mélange jusque dans la zone de détection optique lorsque la cassette de réaction (100) est amenée à pivoter dans le sens des aiguilles d'une montre de 90° par rapport à sa position verticale ;
la deuxième zone de mélange (120) ayant la capacité de recevoir un mélange de liquide et de réactif, la deuxième zone de mélange étant disposée au-dessous de la première zone de mélange (110) de telle sorte que le mélange de liquide (210) s'écoule depuis la zone de détection optique (150) jusque dans la deuxième zone de mélange par l'intermédiaire du premier plan incliné (115) lorsque la cassette de réaction est amenée à pivoter dans le sens inverse des aiguilles d'une montre de 90° jusqu'à retrouver sa position verticale, et de telle sorte que le mélange de liquide (220) soit amené à revenir s'écouler jusque dans la zone de détection optique (150) lorsque la cassette de réaction est amenée à pivoter dans le sens des aiguilles d'une montre de 90° par rapport à sa position verticale ;
la troisième zone de mélange (130) ayant la capacité de recevoir un mélange de liquide et de réactif, la troisième zone de mélange étant disposée (120) de telle sorte que le mélange de liquide (220) s'écoule depuis la zone de détection optique (150) jusque dans la troisième zone de mélange (130) par l'intermédiaire d'un deuxième plan incliné (125) disposé entre les deuxième et troisième zones de mélange lorsque la cassette de réaction est amenée à pivoter dans le sens inverse des aiguilles d'une montre de 175° par rapport à sa position précédente ;
la zone d'absorption (140) ayant la capacité de recevoir un mélange de liquide et de réactif, la zone d'absorption étant disposée au-dessus de la troisième zone de mélange (130) et ayant une paroi anti-gouttes (142) disposée entre la troisième zone de mélange et la zone d'absorption afin d'empêcher le mélange de liquide dans la troisième zone de mélange de déborder jusque dans la zone d'absorption par accident, et la zone d'absorption (140) étant disposée de telle sorte que lorsque la cassette de réaction est amenée à pivoter dans le sens inverse des aiguilles d'une montre de 90° par rapport à sa position verticale, le mélange de liquide (230) soit amené à s'écouler vers la zone d'absorption (140) pour être absorbé par du matériau absorbant (145) inclus dans la zone d'absorption ;
et au moins une zone parmi la première zone de mélange (110), la deuxième zone de mélange (120), et la troisième zone de mélange (130) comprenant au moins une structure de mélange homogène (200) pour engendrer un phénomène de tourbillon dans le liquide, améliorant de ce fait le degré de mélange d'un échantillon de liquide et d'un réactif séché.

2. Cassette de réaction selon la revendication 1, dans laquelle les deuxième et troisième zones de mélange (120, 130) comprennent lesdites structures de mélange homogène (200) qui sont capables d'accueillir des réactifs séchés et d'améliorer le degré de mélange de l'échantillon de liquide et des réactifs séchés.

3. Cassette de réaction selon la revendication 1, la cassette de réaction étant réalisée en des matériaux avec une transparence de qualité optique.

4. Cassette de réaction selon la revendication 1, dans laquelle la zone d'absorption (140) inclut une structure non densifiée évidée avec des ouvertures, dans laquelle les ouvertures sont situées au-dessous de la zone d'absorption, facilitant de ce fait l'absorption de l'échantillon et des réactifs par un matériau absorbant (145).

5. Cassette de réaction selon la revendication 4, dans laquelle le matériau absorbant (145) comprend des matériaux ayant une absorbance élevée, comprenant le coton, les éponges, la diatomite, et le papier filtre.

6. Cassette de réaction selon la revendication 1, dans laquelle la structure de mélange homogène (200) comprend au moins une lame arquée (310), engendrant un écoulement arqué du liquide conformément à sa structure de sorte qu'une partie du liquide crée le phénomène de tourbillon dans le centre de la lame arquée.

7. Cassette de réaction selon la revendication 1, dans laquelle la structure de mélange homogène (200) comprend au moins une lame en forme de diamant (320), engendrant un écoulement incliné du liquide conformément à sa structure de sorte qu'une partie du liquide crée le phénomène de tourbillon en raison d'une différence de vitesse d'écoulement entre un liquide de retour et un autre liquide.

8. Cassette de réaction selon la revendication 1, dans laquelle la structure de mélange homogène (200) comprend au moins une lame trapézoïdale (330), engendrant un écoulement incliné du liquide conformément à sa structure de sorte qu'une partie du liquide crée un phénomène de tourbillon en raison d'une différence de vitesse d'écoulement entre un liquide de retour et un autre liquide.

9. Cassette de réaction selon la revendication 1, dans laquelle une paroi externe (342) de la structure de mélange homogène (200) a une forme sélectionnée parmi une forme circulaire, elliptique, en éventail, arquée, triangulaire, trapézoïdale, oblongue, de losange, de rectangle, de barrière, et polygonale.

10. Dispositif de dosage biochimique, comprenant :
une cassette de réaction (100) pour dosage biochimique telle que revendiquée dans la revendication 1 ;
une partie d'échantillonnage configurée pour être couplée à la cassette de réaction, comprenant :
un tube d'échantillonnage configuré pour aspirer un échantillon de liquide ; et
un réservoir configuré pour stocker un réactif liquide.
